(19) Europäisches Patentamt
European Patent Office
Office européen des brevets

(11) Numéro de publication: **0 013 199**
**B1**

# (12) FASCICULE DE BREVET EUROPEEN

(45) Date de publication du fascicule du brevet: **15.02.84**

(51) Int. Cl.[3]: **H 01 M 6/18**, H 01 B 1/06

(21) Numéro de dépôt: **79400901.9**

(22) Date de dépôt: **22.11.79**

(54) **Générateurs électrochimiques de production de courant et matériaux pour leur fabrication.**

(30) Priorité: **22.11.78 FR 7832976**

(43) Date de publication de la demande:
**09.07.80 Bulletin 80/14**

(45) Mention de la délivrance du brevet:
**15.02.84 Bulletin 84/7**

(84) Etats contractants désignés:
**AT BE CH DE GB IT LU NL SE**

(56) Documents cités:
FR - A - 2 032 949
FR - A - 2 128 102
FR - A - 2 293 486
US - A - 2 747 009
US - A - 2 762 858
US - A - 2 786 088
US - A - 3 551 211
US - A - 3 704 174
US - A - 3 764 385

(73) Titulaire: **ANVAR Agence Nationale de Valorisation de la Recherche**
**13, rue Madeleine Michelis**
**F-92522 Neuilly-sur-Seine (FR)**

(72) Inventeur: **Armand, Michel**
**28, Cours Berriat**
**F-38000 Grenoble (FR)**
Inventeur: **Duclot, Michel**
**2, rue Elie Cartan**
**F-38100 Grenoble (FR)**

(74) Mandataire: **Gutmann, Ernest et al,**
**Cabinet Plasseraud 84, rue d'Amsterdam**
**F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 013 199 B1

Generateurs electrochimiques de production de courant et nouveaux materiaux pour leur fabrication

L'invention concerne de nouveaux générateurs électrochimiques, du type de ceux dans lesquels la réaction électrochimique à l'origine de la production de courant met en jeu le transfert, par conduction ionique par l'intermédiaire d'un électrolyte, de cations provenant d'une électrode négative ou "source" de tels cations, se trouvant à un potentiel chimique supérieur, vers une électrode positive ou "puits" pour l'espèce non ionisée correspondant à ce cation et se trouvant à un potentiel chimique inférieur. Elle concerne aussi des matériaux nouveaux, ainsi que de nouvelles formes d'électrolyte et d'électrode, notamment pour la fabrication de tels générateurs.

L'invention est notamment relative à de tels générateurs, dans lesquels l'électrode négative est apte à fournir un cation alcalin à son interface avec l'électrolyte, le métal alcalin résultant de la décharge de ce cation au contact de l'électrode positive pouvant alors être incorporé dans la structure physique ou moléculaire de cette dernière.

Des générateurs appartenant à ce type incluent ceux dans lesquels l'électrode négative est constituée, par exemple par un métal alcalin tel que le lithium, le sodium ou le potassium, par un composé intermétallique dans lequel un tel métal alcalin se trouve allié à un autre métal, par exemple l'aluminium ou le silicium ou par un composé d'insertion de ce métal alcalin dans un matériau récepteur dans le réseau cristallin duquel peut s'insérer un tel métal alcalin.

Divers matériaux constitutifs de l'électrode positive, qui peuvent être associés dans une chaîne galvanique avec une électrode négative telle que mentionnée ci-dessus, ont également déjà été décrits. Il s'agit par exemple de soufre ou encore de préférence de matériaux contenant un composé, notamment un sel d'un métal de transition conférant à de telles électrodes un potentiel chimique naturellement inférieur à celui de l'électrode négative. Avantageusement, on a recours à des composés de ce type, à structure lamellaire, capables de dissoudre des métaux alcalins, voire des espèces correspondant à d'autres types de cations, par exemple le cation ammonium $NH_4^+$.

Parmi ce dernier type de composés aptes à dissoudre des métaux alcalins en formant des composés d'insertion, on peut citer des composés dits "composés intercalaires", de graphite et d'un sel de métal de transition, comportant notamment des couches de graphite monomoléculaires intercalées entre des couches d'un sel d'un métal de transition, tels qu'ils ont été décrits dans le brevet français FR—A—2 196 293 du 18 août 1972.

Il existe également divers électrolytes solides dont on a proposé l'utilisation dans de tels types de générateurs, en particulier des complexes ou sels minéraux caractérisés par une conductivité à caractère exclusivement ionique. On citera pour mémoire par exemple les composés d'aluminates contenant également des ions alcalins, tels que ceux connus sous la désignation "alumines $\beta$", les cations alcalins de ces matériaux participant alors directement au transfert de charges pendant le fonctionnement de tels générateurs électrochimiques.

Un matériau plastique conducteur, présenté comme pouvant être éventuellement utilisé en tant qu'électrolyte pour de générateurs dont tous les constituants seraient solides ("all-solid state battery"), a été décrit dans la publication de M. Armand, J. M. Chabagno and M. J. Duclot, Abstract. 6.5, "Extended Abstracts, Second International Conference on Solid Electrolytes, St. Andrews, Ecosse, September 20—22, 1978". Il consiste en un complexe formé entre le poly(oxyde d'éthylène) et des sels de métaux alcalins.

Les générateurs appartenant à cette catégorie, qu'il s'agisse de générateurs non rechargeables (générateurs primaires), tels que des piles, ou, plus rarement, de générateurs rechargeables (générateurs secondaires, tels que des accumulateurs) sont sujets à de nombreux inconvénients. Ils ne sont souvent capables de produire un rendement électrique satisfaisant que dans la mesure où leur fonctionnement est assuré à des températures élevées. Il en est ainsi par exemple des accumulateurs sodium-soufre qui ne sont aptes à produire des densités de courant satisfaisantes qu'à des températures de fonctionnement supérieures à 300°C, températures auxquelles les matériaux d'électrode se trouvent alors à l'état fondu. Outre l'inconvénient considérable que représente alors cette température de fonctionnement élevée, il faut citer celui rencontré au niveau des enceintes, boîtiers ou compartiments renfermant les éléments actifs (électrodes et électrolyte) du générateur qui doivent être fabriqués à l'aide de matériaux suffisamment résistants, autorisant de telles conditions de fonctionnement.

Il a déjà été proposé de remédier à ces difficultés en ayant recours, pour la constitution des éléments essentiels de ces générateurs, à des matériaux solides restant dans cet état pendant le fonctionnement de ces générateurs.

Si la construction de tels éléments de générateurs peut alors se trouver simplifiée au niveau de la constitution des enceintes qui les contiennent, il subsiste une difficulté importante qui n'a guère été surmontée jusqu'à ce jour. Cette difficulté provient des variations de volume que peuvent subir les électrodes pendant le fonctionnement de tels générateurs. En particulier, le volume de la négative tend, pendant la décharge, à décroître au fur et à mesure que se consomme sa teneur en métal alcalin, à l'interface avec l'électrolyte, alors qu'au contraire le volume de la positive tend, dans un grand nombre de cas, à s'accroître, dans la mesure où l'insertion dans son réseau des atomes de métal alcalin

s'accompagne le plus souvent d'un écartement des plans cristallins du matériau qui la constituait initialement; d'où des difficultés très importantes en ce qui concerne le maintien des contacts électriques adéquats entre l'électrolyte et les électrodes, à tout le moins des polarisations sévères possibles entraînant des variations importantes des caractéristiques de décharge du générateur. Ce type de difficulté a été résolu en partie dans des générateurs du type de ceux définis dans le brevet français FR—A—2 196 293, déjà mentionné. Il a en effet été indiqué que des atomes de métal alcalin, du moins lorsqu'ils sont de faible taille, peuvent s'insérer entre les plans des composés intercalaires qui y sont décrits, sans entraîner de modification sensible du volume de l'électrode positive. L'indéformabilité mécanique de ces solides — abstraction étant naturellement faire des modifications de volume que subit l'électrode négative pendant la réaction électrochimique — rend difficile le maintien de l'application des éléments essentiels du générateur les uns contre les autres. A ces difficultés, s'ajoute de toute façon la réalisation difficile d'un contact superficiel continu et stable entre matériaux solides. Pour tenter d'y remédier, on a proposé d'avoir recours à l'interposition d'un matériau conducteur liquide. On se retrouve alors confronté aux difficultés que peut impliquer la retenue en place d'un constituant liquide entre des constituants solides.

Le brevet français FR—A—2 032 949/70 06244 a également proposé de remédier à la difficulté de maintenir le contact entre les différents éléments d'un générateur électrochimique, cependant d'un type différent, par l'interposition entre eux, plus particulièrement entre l'électrolyte et les électrodes, ou entre les électrodes et les collecteurs de courant qui leur sont associés, d'une pellicule d'un polymère adhésif ayant les qualités d'un gel, pouvant être rendu conducteur ou utilisé en combinaison avec des électrolytes liquides contenant des sels.

L'invention a pour but de remédier à ces inconvénients, au moins en grande partie, plus particulièrement de proposer des générateurs électrochimiques, et de préférence des générateurs rechargeables, capables d'un fonctionnement satisfaisant à des températures réduites, notamment inférieures à 100°C, et de préférence même à 60°C, dont tous les composants soient et restent à l'état solide pendant le fonctionnement et dont les éventuelles modifications de volume puissent être compensées plus facilement, et dans lesquels les risques de rupture des contacts entre les électrodes et l'électrolyte soient considérablement réduits, sinon supprimés.

Le générateur électrochimique selon l'invention comprend au moins une électrode négative formant une "source" de matériau à potentiel chimique supérieur, apte à fournir un cation alcalin ou ammonium à son interface avec un électrolyte solide et une électrode positive apte à former un "puits" à un potentiel chimique inférieur pour l'espèce non ionisée correspondant au cation alcalin susdit, et un électrolyte du type de ceux qui permettent le transfert de ce cation alcalin par conduction ionique de l'électrode négative à l'électrode positive, à l'occasion de la réaction électrochimique mise en jeu par la production de courant, cet électrolyte solide étant constitué au moins en partie par une solution solide d'un composé ionique entièrement dissous au sein d'un matériau macromoléculaire solide, plastique:

—ledit composé ionique ayant pour formule $M^+X^-$, dans laquelle M est un cation dérivé d'un métal alcalin ou l'ion ammonium, ce cation correspondant au moins en partie au cation susceptible d'être fourni par l'électrode négative à son interface avec, l'électrolyte, et $X^-$ est un anion d'un acide fort,

—ledit matériau macromoléculaire étant formé au moins en partie d'un ou plusieurs homo et/ou copolymères dérivés d'un ou plusieurs monomères comportant au moins un hétéroatome d'un ou plusieurs monomères, notamment d'oxygène ou d'azote, apte à former des liaisons du type donneur-accepteur avec le cation $M^+$.

Ce générateur est caractérisé en ce que l'une au moins des susdites électrodes est constituée par le produit d'agglomération en une masse composite du matériau d'électrode, notamment de la matière active de celle-ci et, le cas échéant, d'un composé inerte à conduction électronique, favorisant le transfert des charges vers l'extérieur, d'une part, et d'une solution solide monophasée de même nature que celle de l'électrolyte solide, d'autre part.

De préférence, le susdit matériau macromoléculaire solide et plastique est également thermoplastique et essentiellement formé de chaînes d'homopolymères ou copolymères non réticulés.

Les matériaux préférés selon l'invention se prêtent aisément à la fabrication de pellicules minces, par exemple par laminage à chaud, à l'état non fondu, ou encore par dépôt sur un support par évaporation du solvant des solutions qu'ils forment dans des solvants organiques ou des solutions de leurs constituants de base, à savoir du matériau macromoléculaire et du sel $M^+X^-$, dans un solvant commun, tel que le méthanol ou l'acétronitrile. On a naturellement recours à des matériaux macromoléculaires ayant une masse moléculaire suffisante pour présenter le caractère de plasticité requis. Ces propriétés sont généralement acquises pour des poids moléculaires de l'ordre de 50.000, étant bien entendu que cette valeur n'a qu'un caractère indicatif. Dans la pratique, ces poids moléculaires seront beaucoup plus élevés, par exemple supérieurs à 3.000.000.

Les électrodes et électrolytes solides ainsi formés sont essentiellement dépourvous d'humidité, c'est-à-dire essentiellement anhydres.

L'invention met à profit les qualités mécaniques des matières plastiques ainsi obtenues à poids moléculaires élevés. Ces électrodes et électrolytes peuvent être constitués par des feuilles extrêmement minces, comme il sera encore explicité plus loin à titre d'exemple. Ces matéraux

plastiques présentent egalement les propriétés propres aux matières plastiques courantes, notamment la capacité de subir des variations de viscosité progressives en fonction de la température.

A ce titre, les matériaux plastiques mis en oeuvre dans les générateurs selon l'invention se distinguent des cires à bas poids moléculaires qui donnent lieu à des fusions quasi franches à ces températures déterminées. Ils se distinguent également à ce titre des gels classiques gonflables dans des proportions importantes par des solvants. De préférence, ces matériaux plastiques ne sont pas gonflables, notamment dans l'eau.

Les matériaux mis en oeuvre dans au moins une électrode et dans l'électrolyte selon l'invention sont de véritables solutions solides des sels minéraux sus-définis dans le matériau plastique, essentiellement en l'absence de tout solvant.

L'invention propose donc un générateur dont l'une au moins des électrodes et l'électrolyte solide présentent une plasticité rendant plus facile la compensation des variations de volume des électrodes, et des qualités d'adhésion au niveau des interfaces électrolytes-électrodes.

Les électrodes du générateur selon l'invention, qui sont constituées d'un matériau à conduction à la fois ionique et électronique, sont particulièrement propices à la formation d'une électrode de générateur du type "tout solide", l'électrode ainsi formée étant elle-même susceptible, grâce à la plasticité, qui lui est alors conférée par son constituant macromoléculaire, de mieux s'adapter aux variations volumiques auxquelles elle-même et éventuellement d'autres constituants des générateurs sont susceptibles de donner lieu pendant le fonctionnement du générateur, que ce soit pendant la charge ou la décharge, dans le cas d'un générateur secondaire. On obtient de même des électrodes dont les surfaces présentent des qualités d'adhésion et d'adaptation également améliorées, par exemple à la surface de l'électrolyte solide qui peut lui être associée.

Il en est encore plus particulièrement ainsi lorsque le matériau macromoléculaire est choisi parmi ceux qui présentent encore, outre la plasticité susmentionnée, des propriétés élastiques permettant à l'ensemble de l'électrode à corriger elle-même, au moins en partie les variations de volume que peut subir sa propre teneur en matière active pendant le fonctionnement du générateur.

En outre, l'incorporation de la solution solide à conduction ionique dans la masse de l'électrode a pour effet d'étendre les réactions électrochimiques dans toute la masse de l'électrode au niveau des grains ou particules dela matière active, par opposition aux générateurs classiques dans lesquels les réactions électrochimiques sont essentiellement limitées aux interfaces entre électrolyte et électrodes. L'amélioration des transferts de charge ionique de l'électrolyte aux électrodes peut conduire à un abaissement relatif de la température de fonctionnement du générateur. De préférence, la granulométrie des particules de matière active et, le cas échéant, du ou des conducteurs électroniques inertes auxiliaires et éventuellement d'autres charges se situe entre environ 1 et environ 300 $\mu$, par exemple de 10 à 100 $\mu$. Dans le cas d'une matière active dont la propre conduction ionique est relativement faible, il peut y avoir intérêt à réduire les granulométries sus-indiquées vers des valeurs plus faibles. On peut noter que la solution solide incorporée joue également un rôle de liant à l'égard des autres constituants de l'électrolyte.

Un avantage supplémentaire de l'incorporation de la solution solide à l'électrode ou de l'agglomération susdite se manifeste lorsqu'on a recours à une matière active qui doit être protégée des atmosphères extérieures. Tel est par exemple le cas en ce qui concerne des générateurs dont la positive est constituée par du sodium, qui doit naturellement être mainpulé dans une absence totale d'humidité et d'oxygène. Cette condition n'est pas supprimée du fait de l'incorporation du sodium à l'état de grains ou de poudre dans une matière macromoléculaire à conduction ionique du genre décrit. Elle est cependant rendue moins rigoureuse, d'où une manipulation plus aisée de ces matériaux que celle du métal pur.

De plus, de tels générateurs sont susceptibles de fonctionner de façon satisfaisante à des températures beaucoup plus basses, notamment inférieures à 150°C, de préférence à 100°C, voire même à 60°C, ce qui représente un avantage indéniable à tous les points de vue déjà mentionnés plus haut.

Avantageusement, le matériau macromoléculaire mis en jeu dans la consitution des solutions solides utilisés dans au moins l'une des électrodes et l'électrolyte du générateur selon l'invention est au moins en partie constitué par des homo ou copolymères contenant des chaînes comprenant au moins un hétéroatome d'oxygène ou d'azote, par quatre, de préférence même deux atomes de carbone desdites chaînes, ces hétéroatomes soit participant directement à la formation desdites chaînes, soit étant directement liés, mais latéralement, à des atomes de carbone d'une chaîne formée à partir d'une succession homogène d'atomes de carbone, à raison d'un hétéroatome par quatre, de préférence deux atomes de carbone.

Dans le premier cas, les hétéroatomes sont donc intercalés entre des atomes de carbone voisins de la chaîne. Dans le second cas, ils font l'objet de liaisons latérales vis-à-vis des atomes de carbone desdites chaînes. Dans le dernier cas, les liaisons libres restantes de ces hétéroatomes peuvent éventuellement être engagées dans une liaison avec des groupes ou des chaînes latéraux.

Les matériaux macromoléculaires qui se prêtent particulièrement bien à la réalisation des susdites solutions solides sont ceux dérivés de motifs monomères du type représenté

—soit par la formule suivante:

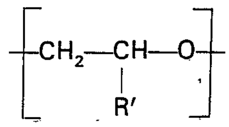

dans laquelle R′ représente un atome d'hydrogène ou l'un des groupes Ra, $—CH_2—O—R_a$, $—CH_2—O—Re—Ra$, $—CH_2—N=(CH_3)_2$ avec Ra représentant un radical alkyle ou cycloalkyle comportant notamment 1 à 16, de préférence 1 à 4 atomes de carbone,

Re représentant un radical polyéther de formule générale $—(CH_2—CH_2—O)_p—$, p ayant une valeur de 1 à 100, notamment de 1 à 2,

—soit par la formule suivante:

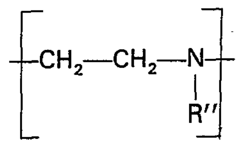

dans laquelle R″ représente Ra, —Re—Ra, avec Ra et Re ayant respectivement l'une des significations sus-indiquées,

—soit par la formule suivante:

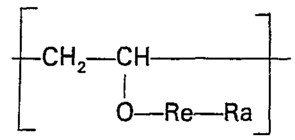

dans laquelle Ra et Re ont respectivement l'une des significations sus-indiquées.

Un premier type de matériau macromoléculaire approprié est constitué par un poly(oxyde d'éthylène), lequel peut être mis en forme par une technique de thermoformage à une température, par exemple de 200°C. Comme on le verra à l'exposé des exemples ci-après, le poly(oxyde d'éthylène) constitue déjà un matériau macromoléculaire qui peut être utilisé avec grand avantage pour la constitution de générateurs conformes à l'invention, malgré sa tendance à former des structures cristallines qui, du moins pour certaines concentrations relatives en sels alcalins, est de nature à rendre plus difficile la diffusion homogène de celui-ci en son sein.

Une catégorie préférée de matériaux macromoléculaires — utilisés pour la constitution des solutions solides des générateurs selon l'invention sont formés par des élastomères amorphes et par conséquent isotropes, qui appartiennent à la classe générale définie ci-dessus et qui sont dérivés de motifs monomères du type représenté

—soit par la formule suivante:

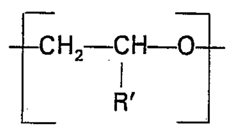

dans laquelle R′ représente l'un des groupes Ra, $—CH_2—O—Ra$, $—CH_2—O—Re—Ra$, $—CH_2—N=(CH_3)_2$, avec

Ra représentant un radical alkyle ou cycloalkyle comportant notamment 1 à 12, de préférence 1 à 4 atomes de carbone,

Re représentant un radical polyéther de formule générale $—(CH_2—CH_2—O)_p—$, p ayant une valeur de 1 à 10,

—soit, par la formule suivante:

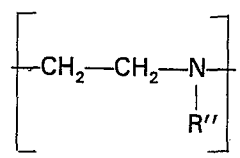

dans laquelle R″ représente Ra, —Re—Ra, avec Ra et Re ayant respectivement l'une des significations sus-indiquées,

—soit par la formule suivante:

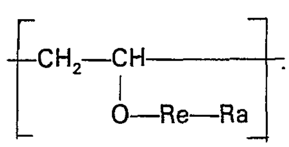

dans laquelle Ra et Re ont respectivement l'une des significations sus-indiquées.

Les propriétés d'élasticité, d'amorphisme et d'isotropie de ces derniers matériaux contrastent avec la cristallinité des complexes poly(oxyde d'éthylène) comme décrit dans un article de Peter V. Wright dans "Br. Polym. J." 1975, 7, 319—327, intitulé "Electrical Conductivity in Ionic Complexes of Poly (ethylene oxide)" (conductivité électrique dans des complexes ioniques du poly(oxyde d'éthylène)). On rappelle que cet auteur a incorporé certains sels à des poly (oxyde d'éthylène) à haut degré de cristallinité, afin d'étudier les comportements du complexe polymère-sel obtenu, à haute cristallinité, notamment à proximité de ses points de transition.

Le caractère amorphe de ces matières peut être apprécié notamment par examen aux rayons X. Leur diagramme de rayons X se limite à un fond diffus comportant dans les cas les plus défavorables des raies extrêmement larges, par opposition à un matériau macromoléculaire plus cristallin, comme le poly(oxyde d'éthylène) dont le diagramme de diffraction aux rayons X fait apparaître des bandes relativement nettes témoignant d'une organisation cristalline qui peut être relativement poussée, les cristaux pouvant occuper jusqu'à 80% du volume de la masse.

Le caractère amorphe peut encore s'apprécier par la transparence pour au moins certains des matériaux en question, par exemple le poly(oxyde de propylène) par opposition au poly(oxyde d'éthylène) qui est translucide.

Les électrolytes et électrodes constitués à partir de tels élastomères bénéficient alors de l'avantage supplémentaire qui consiste dans la compensation au moins partielle des variations de volume des électrodes pendant la charge ou la décharge des générateurs correspondants, grâce à leur propre capacité à, selon le cas, subir des compressions ou des dilatations.

La diffusion du sel alcalin $M^+X^-$ dans de tels matériaux amorphes peut également se révéler plus aisée et ce, quelles que soient les proportions relatives des deux matériaux, les solutions solides ainsi formées se prêtant également à un thermoformage, notamment par laminage, à des températures qui peuvent être plus basses, par exemple de l'ordre de 150°C pour les solutions solides à base de poly (oxyde de propylène).

Il va sans dire que la proportion de sel alcalin vis-à-vis du matériau macromoléculaire ne doit normalement pas dépasser la limite de solubilité maximum, au-delà de laquelle il se formerait alors deux phases distinctes. Il en résulterait des précipitations du sel alcalin au sein du matériau macromoléculaire, précipitations qui altèreraient les propriétés de conduction ionique des électrolytes ainsi constitués, notamment par formation de zones ou points non ou peu conducteurs. La proportion maximum théorique (qui peut n'être pas toujours atteinte avec un certain nombre des sels alcalins susceptibles d'être mis en oeuvre) de sel alcalin vis-à-vis du matériau macromoléculaire correspond à un rapport du nombre d'hétéroatomes (oxygène ou azote) au nombre d'atomes alcalins égal à 4. Ce nombre 4 correspond en effet au maximum de cations alcalins $M^+$ susceptibles d'être solvatés par les doublets électroniques libres des susdits hétéroatomes. Dans le pratique, ce rapport est compris entre 4 et 30. Les conduvtivités maxima sont en général constatées pour des valeurs de ce rapport qui sont situées entre 4 et environ 20, étant entendu que ce nombre 20, pas plus d'ailleurs que le nombre 30 sus-indiqué, ne constitue des limites critiques au-delà desquelles les solutions solides correspondantes échapperaient à la portée de l'invention. Il apparaîtra naturellement au technicien que l'utilisation de proportions décroissantes du sel alcalin vis-à-vis du matériau macromoléculaire se manifestant par conséquent par une augmentation de la valeur du rapport susdit pourra entraîner une réduction de la conductivité des matériaux en question.

Avantageusement, le rapport du nombre d'atomes de carbone au nombre d'hétéroatomes dans le matériau macromoléculaire lui-même est aussi faible que possible, notamment compris entre 2 et 18, de préférence de 2 à 3, compte tenu de l'intérêt de disposer d'un nombre maximum de ces hétéroatomes — en raison de leur action de solvatation à l'égard des cations $M^+$ sus-définis — par unité de volume du matériau d'électrolyte.

En ce qui concerne particulièrement l'anion du sel $M^+X^-$ utilisé pour la constitution desdites solutions solides, il est avantageusement caractérisé par un rayon ionique égal à 181Å (rayon ionique de l'anion chlore) ou de préférence supérieur à cette valeur. A ce titre, l'ion iode ($I^-$) est préféré. Il en est plus particulièrement encore de même en ce qui concerne les anions formés de molécules complexes, dans lesquelles la charge négative est partagée entre plusieurs atomes. On peut aussi retenir, du moins en ce qui concerne les acides qui sont stables en milieu aqueux, que leur force est sensiblement égale ou de préférence supérieure à celle de l'acide chlorhydrique.

En ce qui concerne le cation $M^+$, il est entendu qu'il peut recouvrir plusieurs espèces métalliques distinctes, cas dans lequel le sel en question devient un sel mixte de plusieurs métaux, étant évidemment entendu que la somme des charges positives de ces divers cations doit équilbrer les charges négatives portées par les anions. Un exemple d'un tel sel mixte est $(Li_{0.5}K_{0.5})SCN$. La même observation est naturellement susceptible de s'étendre aux sels du type $M^+X^-$, dans lesquels pourraient intervenir plusieurs anions de structures chimiques distinctes.

Il est avantageux d'avoir recours aux cations dérivés du lithium ou du sodium, dans la mesure où ceux-ci ont des volumes réduits permettant leur dissolution plus aisée dans le matériau de l'électrode positive, au prix d'une déformation éventuelle réduite de celle-ci. Il ne s'agit cependant pas d'une condition critique, d'autres cations alcalins pouvant également être utilisés avec avantage. Les

solutions solides mettant en jeu les ions ammonium $NH_4^+$ sont utilisables pour la constitution d'un générateur électrochimique comportant la chaîne galvanique:

$$\frac{1}{2}H_2+NH_3 / \text{électrolyte transportant } NH_4^+/MoO_3$$

Des anions préférés sont choisis parmi les suivants:

$$SCN^-, ClO_4^-, BF_4^-, PF_6^-, AsF_6^-, CF_3CO_2^-, CF_3SO_3^-.$$

Des solutions solides préférées selon la présente invention comprennent des sels dont le cation dérive de l'atome de lithium ou de sodium et dont l'anion est choisi parmi

$$I^-, SCN^-, ClO_4^-, BF_4^-, PF_6^-, AsF_6^-, CF_3CO_2^-, CF_3SO_3^-.$$

Une autre catégorie de solutions solides préférées est celle dans laquelle l'anion du composé ionique est choisi parmi les anions suivants:

$$SCN^-, PF_6^-, AsF_6^- \text{ et } CF_3SO_3^-$$

et le cation parmi les cations suivants:

$$Li^+, Na^+, K^+ \text{ et } NH_4^+.$$

Une autre catégorie encore de solutions solides avantageuse est celle dans laquelle l'anion du composé ionique est

$$PF_6^- \text{ ou } AsF_6^-$$

et le cation $Rb^+$ ou $Cs^+$.

D'une façon générale, des composés avantageux sont ceux qui présentent des conductivités ioniques supérieures à $10^{-5}\ \Omega^{-1}.cm^{-1}$, de préference à des températures inférieures à 150°C, plus particulièrement encore inférieurs à 100°C, voire même à 60°C ou même à la température ambiante, surtout dans le cas où l'on a recours à des électrolytes très minces.

En effet, un avantage supplémentaire important de l'invention réside dans le fait qu'il est possible avec les matériaux considérés de fabriquer des feuilles d'électrolyte extrêmement minces, de l'ordre de quelques centièmes de millimètre, de 1 à 20/100$^e$ de millimètre ou beaucoup moins, notamment de 1 à 3/100$^e$ de millimètre.

Il est à noter que l'électrolyte joue essentiellement dans les générateurs selon l'invention un rôle de transporteur de cations de la négative vers la positive, en l'absence de tout séparateur. L'électrolyte peut donc être très mince, notamment beaucoup plus mince que les électrodes auxquelles il se trouve associé. L'épaisseur de l'électrolyte peut être par exemple inférieure à 30%, voire même 10%, des épaisseurs des électrolytes associés. Ces possibilités d'extrême minceur qui résultent des qualités mécaniques et plastiques des matériaux d'électrode peuvent permettre un accroissement important des capacités volumiques des éléments de générateurs ainsi constitués.

Pour ce qui est de la préparation des solutions solides de composé ionique $M^+X^-$ et du composé macromoléculaire sus-défini, on peut, par exemple, procéder par dissolution du composé ionique et du polymère dans un solvant commun tel que le méthanol ou l'acétonitrile. Un autre mode d'obtention de la susdite solution solide consiste à broyer un mélange du métériau macromoléculaire et du composé ionique, et à faire fondre le mélange à une température environ égale ou supérieure à celle du polymère et à le malaxer à chaud, dans la mesure nécessaire à la formation de la solution solide.

Les proportions relatives des constituants de base susceptibles d'être mises en oeuvre dans ce procédé correspondent sensiblement à celles qui sont désirées dans le produit final. De préférence, on mettra en oeuvre au moins une mole du composé ionique par kg de matériau macromoléculaire, les proportions utilisées ne dépassant cependant pas celles correspondant aux limites de solubilité du composé ionique dans le matériau macromoléculaire.

Conformément à une caractéristique supplémentaire de l'invention, on peut encore incorporer à l'électrolyte ainsi formé des constituants exclusivement à conduction ionique, tels que de l'alumine $\beta$ au lithium, sodium ou potassium, des mélanges d'iodures de lithium et d'alumine ($LiI(Al_2O_3)$) ou encore de silico-phosphate double de zirconium et sodium de formule $Na_3Zr_2PSi_2O_{12}$ ou encore de germanate double de zinc et de lithium(tel $Li_{14}ZnGe_4O_{16}$), ce qui peut avoir pour effet d'améliorer encore les caractéristiques de conductivité ionique de l'électrolyte composite ainsi obtenu. Avantageusement, cette incorporation consiste à malaxer ensemble une solution solide avec de la poudre de ces matériaux minéraux ou à soumettre à l'évaporation une suspension de ces matériaux minéraux dans une solution dans un solvant organique tel que visé ci-dessus, soit de la solution solide à conduction ionique, soit

des constituants à partir desquels elle peut être formée. Les proportions relatives de chacun de ces types de constituants peuvent être quelconques, celles du conducteur ionique exclusivement minéral ne dépassant cependant pas celles pour lesquelles les matériaux composites obtenus ne pourraient plus être laminés en feuilles ou ne présenteraient plus la teneur mécanique désirable. La proportion du constituant minéral ou exclusivement minéral à conduction ionique pourra néanmoins atteindre jusqu'à 90% en poids de la masse totale, de préférence de 50 à 80%. Sans que les valeurs puissent être interprétées comme ayant une valeur critique, on a avantageusement recours à des matériaux minéraux pulvérulents de ce type ayant une granulométrie d'environ 0,1 (ou même moins) à 500 $\mu$, de préférence 0,1 à 10 microns, notamment dans le cas où le matériau composite obtenu est destiné à la fabrication de feuilles ou pellicules d'électrolyte très minces.

On peut même éventuellement incorporer au matériau d'électrolyte des particules d'une poudre inerte non conductrice. Ces particules déterminent alors, en raison de leur granulé-métrie, les épaisseurs minima susceptibles d'être atteintes à l'occasion des opérations de laminage.

Il n'est pas nécessaire d'insister sur les procédés de fabrication des sels mis en oeuvre à titre de composé ionique. De même, les matériaux macromoléculaires sont aisément accessibles.

Certains des monomères ou polymères correspondants sont disponibles dans le commerce ou peuvent être fabriqués selon des techniques connues. Par exemple, on peut mentionner parmi les monomères correspondant aux polymères (homopolymères ou copolymères) comportant des motifs du type:

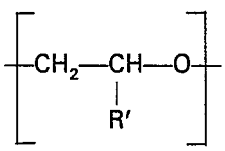

R' ayant la signification susmentionnée, ceux qui sont disponibles dans le commerce, en particuilier ceux dans lesquels R' représente H, $CH_3$, $C_2H_5$, HC=CH (vinyle), $C_{12}H_{24}$, $C_{12}H_{22}$ (cyclododécane), $C_{14}H_{30}$, $C_6H_5$(phényle) ou bien ceux dans lesquels R' représente $CH_2—O—Ra$, Ra appartenant à la catégorie suivante de radicaux: $CH_3$, $C_2H_5$, $C_3H_7$ (n propyle et isopropyle), $C_4H_3$, $C_5H_{11}$, $C_6H_{13}$, $C_8H_{17}$, $C_{12}H_{25}$, $C_{16}H_{33}$, $C_6H_5$ (phényle), $CH_3C_6H_4$ (ortho, méta ou para tolyle).

Les matériaux macromoléculaires correspondants peuvent être obtenus par homopolymérisation ou copolymérisation des monomères correspondants selon des techniques connues, par exemple à l'aide de catalyseurs, tels que ceux décrits dans les brevets américains US—A—3 728 320 et US—A—3 728 321.

Les matériaux macromoléculaires appartenant à la catégorie de matériaux susmentionnée et dérivant du motif monomère suivant:

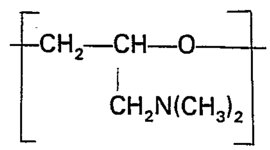

sont obtenus par polymérisation de l'épichlorhydrine et traitement du polymère obtenu par la diméthylamine ou, de préférence, le dimémethylamidure de lithium au sein d'un solvant du polymère, par exemple le tétrahydrofuranne.

La catégorie de matériaux macromuléculaires dérivés de motifs monomères du type représenté par la formule

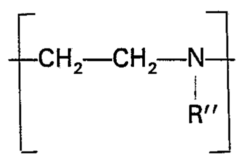

R'' ayant la signification susmentionnée, est obtenue par exemple par polymérisation des aziridines, notamment en présence des catalyseurs mentionnées dans les publications suivantes: W. G. Barb, J. Chem. Soc. 2577 (1955), Farbwerke Hoechst A. G. Ger. Off. 914.325 (1949), etc.

La catégorie de matériaux macromoléculaires dérivés de motifs monomères du type représenté par la formule:

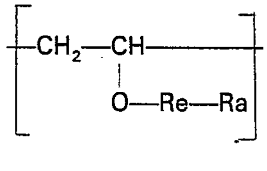

Re, Ra ayant les significations sus-indiquées, est disponible dans le commerce lorsque Re représente $CH_2—CH_2—O$ et Ra le radical méthyle ou éthyle, et lorsque Re représente $(CH_2—CH_2—O—)_p$, p variant de 2 à 4 et Ra représentant le radical méthyle.

Les autres matériaux de la susdite catégorie sont accessibles par des voies de synthèse décrites par exemple dans la "Encyclopedia of Polymer Science and Technology", vol. 14, p. 504, éditée par Interscience Publishers, New York, ou dans le brevet américain US—A—2 311 567.

L'agglomération dans une masse composite de la solution solide susdite et des autres constituants de l'électrode concernée est aussi particulièrement avantageuse dans le cas où l'on a recours à des matériaux d'électrode ayant des propriétés mécaniques les rendant peu aptes à des mises en forme sous des volumes déterminés. Il en est par exemple ainsi du matériau d'électrode constitué par un alliage d'aluminium et de lithium qui, pris seul, est très peu ductile.

Les proportions de solution solide et de matériau d'électrode peuvent varier dans des proportions importantes. De préférence, la proportion de solution solide ne dépasse cependant pas 25% en poids, bien que cette valeur n'ait pas en soi une signification critique. Le spécialiste appréciera cependant qu'il ne peut y avoir dans la pratique intérêt à trop augmenter la proportion de la solution solide dans l'électrode pour la simple raison qu'il en résulte une réduction concomitante de leur capacité électrique.

Les électrodes ainsi modifiées peuvent être obtenues par mélange ou malaxage intime des constituants alors à l'état pulvérulent du matériau d'électrode, d'une part, et de la solution solide, d'autre part, cette opération pouvant le cas échéant être suivie d'un chauffage pour produire la fusion des particules de la solution solide, avec pour corollaire une meilleure adhésion des particules du matériaux de l'électrode entre elles. On peut également encore procéder par mise en suspension du matériau d'électrode pulvérulent au sein d'une solution dans un solvant organique du matériau constitué par la susdite solution solide ou des constituants à partir desquels elles peuvent être formées, en l'occurrence le matériau macromoléculaire, d'une part, et le sel $M^+X^-$, d'autre part, et par évaporation du solvent dans des conditions semblables à celles qui seront décrites plus loin en rapport avec des modes de préparation préférés de l'électrolyte du générateur selon l'invention.

Les électrodes perfectionnées qui ont été décrites plus haut sont caractérisées par des qualités de plasticité, plus particulièrement thermoplasticité et, le cas échéant, d'élasticité (lorsque'il est fait usage des matériaux macromoléculaires amorphes et isotropes définis plus haut).

L'invention permet donc une mise en forme aisée des électrodes, notamment par coulage d'une suspension telle que définie ci-dessus sur un support, par exemple de polytétrafluoréthylène.

Les compositions à conduction à la fois électronique et ionique ainsi obtenues, qui sont appropriées à la fabrication directe d'électrodes de générateurs électrochimiques, présentent donc encore l'avantage supplémentaire d'une réalisation industrielle aisée et économique d'électrodes de grande surface. En effet, la plasticité de ces compositions permet la mise en forme, notamment par laminage, des électrodes en question. Une grande variété de configurations peut être envisagée. Il est possible de réaliser ainsi des éléments de générateurs électrochimiques par simple empilement de feuilles ou pellicules, respectivement d'électrolyte et des électrodes correspondantes, éléments empilés qui peuvent éventuellement être enroulés en spirale selon des méthodes classiques appliquées par exemple à la fabrication de condensateurs diélectriques.

Dans une réalisation particulièrement avantageuse de l'invention, on a recours à la même solution solide pour la constitution de l'électrolyte et du matériau d'incorporation aux électrodes, de façon à constituer les éléments de générateurs dans lesquels cette solution solide s'étend de façon sensiblement continue à partir de l'électrolyte vers et dans les susdites électrodes, de sorte que se trouvent établies des qualités de contact qui restent intimes pendant toutes les opérations qu'effectue cet élément de générateur (charge ou décharge) entre l'électrolyte et les électrodes. De tels éléments générateurs peuvent être obtenus par exemple par formation dans l'ordre approprié des pellicules successives des électrodes, d'une part, et de l'électrolyte, d'autre part, en ayant recours par exemple à la technique mentionnée plus haut consistant, selon le cas, à former ces pellicules:

—soit par dépôt sur un support, de préférence non adhérent ou sur la pellicule précédemment formée de l'électrolyte, d'une suspension du matériau d'électrode dans une solution du matériau destinée à former la susdite solution solide ou des constituants nécessaires à l'obtention de celle-ci, pour ce qui est de la fabrication des électrodes;

—soit par dépôt notamment sur une pellicule d'électrode précédemment formée de la seule solution susdite, suivie de l'évaporation du solvent, pour ce qui est de la formation de la pellicule d'électrolyte.

Il va naturellement de soi que des éléments de générateurs présentant des caractéristiques semblables peuvent être également obtenus en ayant recours à d'autres procédures, notamment par formation séparée des pellicules d'électrodes et d'électrolytes, ces pellicules étant ensuite réunies entre elles par contact, par exemple par pressage à chaud à une température permettant le ramollissement de ladite solution solide.

Pour préparer l'électrolyte lui-même, en vue de son incorporation dans un générateur électrochimique, on peut notamment mettre en oeuvre l'un ou l'autre des procédés déjà mentionnés plus haut pour la fabrication de la matière elle-même.

Partant par exemple d'une solution des matériaux macromoléculaires et selt métalliques choisis,

celle-ci peut être coulée sur une plaque, le solvent étant ensuite éliminé par évaporation, à l'étuve, par exemple à une température de l'ordre de 50°C. On obtient après séchage une pellicule qui peut être décollée du support, celui-ci étant avantageusement à cet effet constitué d'un matériau non adhérent, tel que le polytétrafluoréthylène. Il va de soi que l'épaisseur de la pellicule mince obtenue sera fonction de la quantité de matière première mise en oeuvre au sein de la solution.

Le support en question peut également être constitué par l'une des électrodes, notamment la positive, à laquelle l'électrolyte ainsi formé doit être associé dans le générateur final. La négative peut à son tour, en particulier lorsqu'elle est constituée de sodium ou d'un alliage à bas point de fusion, être réalisée par coulage sur la surface libre de l'électrolyte du sodium ou de l'alliage à l'état liquide et par refroidissement de la couche ainsi formée, bien entendu dans une atmosphère inerte en anhydre. Il va de soi que toute autre méthode de production d'un élément de générateur peut être envisagée. On peut également procéder par simple empilement de pellicules minces des matériaux d'électrode sur les deux facès opposés d'une pellicule d'électrolyte préalablement formée.

D'une façon générale, et plus particulièrement dans les générateurs "tout solide" du type secondaire rechargeable, on peut avoir recours pour la constitution de la négative ou de la masse active de la négative à tout composé capable de libérer un ion alcalin à son interface avec l'électrolyte solide, donc témoignant d'une affinité électronique réduite à l'égard du métal alcalin correspondant. On peut donc utiliser le métal lui-même, des composés intermétalliques ou alliages le contenant et répondant à la condition sus-indiquée, par exemple des alliages de lithium et d'aluminium ou de silicium, sodium ou arsenic. De même, on peut avoir recours à des composés d'insertion de ce métal alcalin dans un matériau récepteur, dans le réseau cristallin duquel il est susceptible de s'insérer. On peut avoir recours notamment à des composés à structure notamment lamellaire, autorisant l'insertion de ces atomes alcalins dans leur structure, les composés intercalaires étant choisis parmi ceux qui présentent eux-mêmes un potentiel chimique proche de celui du métal alcalin. A titre d'exemple de composés d'insertion obtenus, on peut citer ceux du graphite, tels que ceux de formule globale $LiC_6$, $KC_8$, etc. ou encore des composés mixtes de ces métaux alcalins avec des borures d'aluminium. Il va de soi que ces énumérations n'ont aucun caractère limitatif et qu'on peut utiliser avec avantage tout composé d'insertion contenant le métal alcalin et dont le potentiel chimique global ne se distinguera au plus que modérément de celui du métal alcalin pur. De préférence, on choisira ceux des composés d'insertion dont les potentiels chimiques ne sont pas inférieurs de plus de 0,5 électrons-volts (eV) vis-à-vis de celui du métal alcalin.

A l'opposé, il est avantageux d'avoir recours pour la positive ou pour la constitution de la masse active de la positive à tout composé mixte du composé intercalaire comprenant des composés ou sels d'un métal de transition alcalin possédant une forte activité electronique à l'égard des métaux alcalins et susceptible d'imposer à ceux-ci, lorsqu'ils sont à l'état ionisé, un potentiel chimique faible vis-à-vis de celui qu'ils présentent lorsqu'ils se trouvent à l'état métallique. La différence entre les deux potentiels chimiques ainsi considérés est avantageusement égale ou supérieure à 2,5 eV, par exemple de l'ordre de 3 eV.

Au titre des métaux de transition que l'on utilise avantageusement dans l'électrode positive, on cite le titane, le vanadium, le chrome, le manganèse, le fer, le nickel, le cobalt, le cuivre, le niobium, le tantale, le molybdène, etc.

A titre non limitatif, on peut citer parmi les composés répondant à des conditions de ce type, les composés intercalaires de graphite et d'un sel d'un métal de transition capables d'accepter l'insertion dans leur structure de certaines proportions d'atomes alcalins, tels qu'ils ont été décrits dans le brevet français FR—A—2 196 293 déjà mentionné plus haut. A ce type de composés, se rattachent par exemple des composés graphite-sel de métal de transition, tels que graphite-$NiCl_2$.

A titre d'autres exemples, bien entendu non limitatifs, on peut encore citer:

—les dichalcogénures de métaux de transition, tels que $TiS_2$, $NbSe_2$, etc.,

—les oxyhalogénures de métaux de transition, par exemple FeOCl, CroBr, etc.,

—les halonitrures de métaux de transition, par exemple TiNCl, ZrNCl, HfNBr, etc.

Bien entendu, ces matériaux peuvent déjà comporter certaines proportions de métal alcalin pré-insérées dans leur structures respectives, bien entendu en deçà du taux de saturation.

L'invention permet par conséquent la fabrication de générateurs de production de courant, rechargeables, dont les différents éléments constitutifs peuvent être extrêmement minces. A titre d'exemple, il est possible notamment de produire tout élément de générateur extrêmement mince mettant en oeuvre par exemple des pellicules ou feuilles d'électrolyte ayant une épaisseur comprise entre environ 0,01 et environ 0,2 mm et des feuilles ou pellicules d'électrode ayant des épaisseurs de 0,1 à 0,5 mm. Il va de soi que de telles indications n'ont qu'une valeur indicative qui ne saurait être interprétée comme limitant la portée de l'invention. Les ensembles ainsi formés doivent naturellement, en particulier dans le cas où l'on a recours à des composés sensibles à l'humidité, être isolés dans des boîtiers ou compartiments parfaitement étanches. Le cas échéant, les différentes parties de chaque élément de générateur (électrolyte et électrodes de signes opposés) sont maintenues serrées les unes contre les autres par l'intermédiaire de moyens résilients ou élastiques, éventuellement une feuille supplémentaire d'un élastomère apte à absorber les éventuelles variations de volume auxquelles les électrodes peuvent donner lieu au cours du fonctionnement du générateur. Dans le cas où l'on a recours

à des matériaux macromoléculaires du type élastomère pour la constitution de l'électrolyte et éventuellement pour l'incorporation dans les électrodes, l'utilisation de ces moyens résilients peut se révéler inutile, dans la mesure où certains au moins des composants essentiels de chaque élément de générateur peuvent être capables de compenser les variations de volume par eux-mêmes, grâce à leur aptitude à la dilatation ou à la compression selon le cas. Il peut être avantageux de prévoir pour les boîtiers des dimensions, notamment dans le sens de l'épaisseur, correspondant à celles des sommes des épaisseurs de ces constituants à la valeur normalement minimum qu'elles prendraient en l'absence de compression exercée sur les faces opposées extérieures de l'ensemble formé par lesdits constituants. Bien entendu les différents éléments peuvent être connectés en série, en vue de l'obtension de générateurs de puissance ayant des performances élevées.

L'invention est applicable dans tous les domaines où est recherchée la production d'énergie électrique, que ce soit au niveau de la microélectronique, des générateurs de très faible puissance mais susceptibles de fonctionnement pendant des durées importantes, tels que par exemple des piles de stimulateurs cardiaques ou "pacemakers", ou au niveau de la traction électrique ou des applications mettant en jeu d'importants transferts de courant électrique (débit ou stockage d'énergie), par exemple dans le domaine du lissage des courbes de puissance des centrales électriques (stockage d'énergie pendant les heures creuses et grandes quantités d'énergie débitée dans le réseau électrique pendant les heures de pointe).

D'autres caractéristiques et avantages de l'invention apparaîtront encore au cours de la description qui suit d'exemples de réalisation mettant en évidence les possiblités d'application de l'invention. Ces exemples n'ont bien entendu qu'une valeur indicative et non limitative. Il sera également fait référence aux dessins, dans lesquels:

—la fig. 1 est un schéma de principe d'un élément de générateur secondaire rechargeable mettant en application les apports de l'invention;

—les fig. 2 et 3 sont illustratives de la variation de conductivité électrique (exprimée en $\Omega^{-1}.cm^{-1}$) de certains électrolytes solides pris à titre d'exemples, en fonction de la température (exprimée en °C et/ou par l'inverse de la température Kelvin multipliée par

$$1000 = \frac{103}{T} K^{-1}).$$

Exemple I

Cet exemple est relatif à la fabrication d'un générateur.

L'électrolyte solide est constitué par une solution solide d'iodure de sodium NaI dans du poly(oxyde d'éthylène). Elle est obtenue en dissolvant 3 g de poly(oxyde d'éthylène) de masse moléculaire 5.000.000 dans 100 ml de méthanol, auquel on ajoute 2,5 g d'iodure de sodium. On coule ensuite une partie de la solution obtenue sur une plaque de polytétrafluoréthylène et sur une épaisseur de 5 mm. On élimine le solvant à l'étuve à 50°C. Après séchage complet, on obtient, une plaque ayant une épaisseur de l'ordre de 0,02 mm.

L'électrode positive est formée à partir de 75% en poids de sulfure de titane $TiS_2$, 10% en poids de poudre de graphite et 15% en poids de l'électrolyte ci-dessus décrit. Elle est obtenue par coulage sur une plaque de polytétrafluoréthylène de dimensions semblables à celle de la précédente d'une suspension des composants de l'électrode dans le méthanol ou l'acétonitrile, suivie de l'évaporation du solvant organique. La pellicule d'électrode obtenue a une épaisseur d'environ 0,3 mm. Les pellicules minces de l'électrode positive et de l'électrolyte sont ensuite mises en contact par pressage à chaud à 150°C et l'électrode négative est obtenue par coulage de sodium liquide très pur, sur une épaisseur de 2 mm sur l'électrolyte solide.

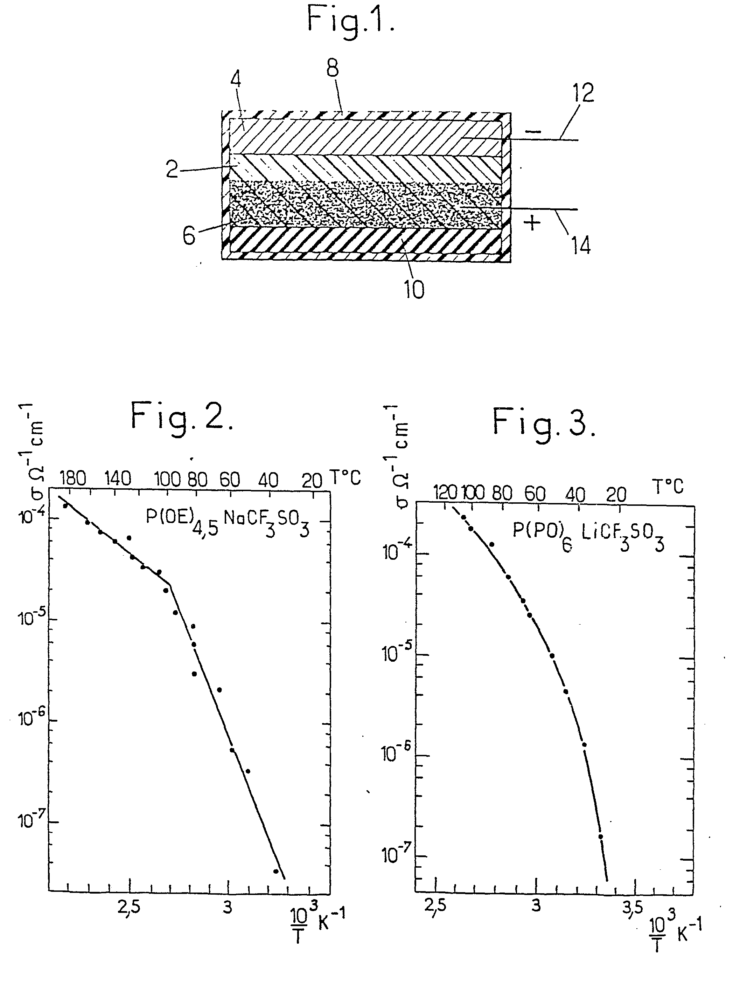

L'électrolyte et les deux électrodes de signes opposés d'un tel élément de générateur sont schématiquement visés par les références 2, 4 et 6 de la fig. 1. Ils sont enfermés dans un boîtier étanche 8. Une feuille élastique 10 contribue à maintenir appliqués les uns contre les autres les constituants essentiels de cet élément de générateur. Cette nécessité d'application des constituants essentiels du générateur qui peut être réalisé même en l'absence de tels moyens élastiques, dans le cas où l'électrolyte lui-même est constitué à partir d'un matériau macromoléculaire élastomère, est dans l'exemple présent, requis surtout à l'interface de l'électrode de sodium 4 et de l'électrolyte 2. Cette application de l'un des constituants contre l'autre est moins nécessaire entre l'électrode 2 et la positive 6, dans la mesure om le matériau ionique de l'électrolyte 2 se prolonge en quelque sorte vers l'électrode 6 du fait de la teneur de cette dernière en matériau macromoléculaire à conduction ionique qui lui est incorporé. Le boîtier étanche livre naturellement passage à des conducteurs électriquement connectés aux électrodes respectivement désignés en 12 et 14 et qui peuvent être eux-mêmes reliés à un circuit extérieur non représenté.

Le générateur ainsi obtenu présente les caractéristiques suivantes: la force électromotrice maximum est de 2,6 volts et l'intensité du courant débité dans une résistance de 10 kilo-ohms, pour une surface de 1 $cm^2$ d'électrode, est de 0,2 mA. On remarque que ces résultats sont obtenus avec un électrolyte dont la conductivité est de l'ordre de $10^{-5}$ $ohms^{-1}.cm^{-1}$ à une température de 45°C.

Exemple II

On peut, dans les mêmes conditions, réaliser une générateur électrochimique de ce type en ayant recours à une feuille d'électrolyte préparée de la façon suivante.

On dissout 1 g de poly(oxyde de propylène) ayant une masse moléculaire de l'ordre de 100.000 dans 30 ml d'acétonitrile et l'on ajoute à la solution obtenue 448 g de trifluorométhane-sulfonate de lithium. A partir de cette solution, on obtient une pellicule de solution solide, en opérant dans les mêmes conditions qu'à l'exemple I. Ce matériau présente une conductivité de $10^{-5}$ ohms$^{-1}$.cm$^{-1}$ à une température qui est de l'ordre de 45°C. Un générateur mettant en oeuvre ce matériau est donc susceptible de produire des rendements électriques satisfaisants déjà à une telle température de fonctionnement. Ces rendements ne peuvent qu'être améliorés en travaillant à des températures un peu plus élevées, mais restant très compatibles avec les caractéristiques de résistance thermique des matériaux conventionnels pour réaliser des boîtiers ou compartiments de générateurs. Il en est par exemple ainsi des matériaux moulables tels que le polyéthylène, le polypropylène ou le polystyrène, dont les températures de ramollissement se situent autour de 100°C.

Exemple III

De même, on réalise des générateurs susceptibles de fonctionner à des températures peu élevées en ayant recours aux solutions solides dont les constitutions et certaines de leurs caractéristiques électrochimiques sont indiquées dans le tableau I ci-dessous. Toutes ces solutions solides ont été produites par le procédé décrit à l'exemple I, naturellement appliquées aux proportions correspondantes du matériau macromoléculaire, d'une part, et du sel ionique, d'autre part.

Dans ce tableau, PEO désigne le poly(oxyde d'éthylène), PPO le poly(oxyde de propylène), le chiffre en regard des composants de la solution solide représentant le rapport du nombre d'hétéroatomes au nombre de cations du métal alcalin, la température (0[$10^{-5}$]) indiquée correspondant à la température pour laquelle la condutivité de l'électrolyte constitué par ladite solution solide est de $10^{-5}$ ohms.$^{-1}$.cm$^{-1}$.

Les fig. 2 et 3 sont représentatives des variations, en fonction de la température, des conductivités de deux matériaux pris à titre d'exemple, notamment PEO/$Na^+CF_3SO_3^-$ et PPO/$Li^+CF_3SO_3^-$, dans lesquels les rapports des nombres d'héteroatomes aux nombres de cations sont respectivement de 4, 5 et 6. On remarque l'absence de point de transition observable pour le deuxième de ces matériaux, absence qui est due au caractère amorphe de ce dernier.

TABLEAU I

| Electrolyte solide | Hétéroatomes / cations | $\theta$ [$10^{-5}$] |
|---|---|---|
| $PEO/Li^+Br^-$ | 4,5 | 150° |
| $PEO/Na^+I^-$ | 6 | 55° |
| $PEO/Na^+I^-$ | 4,5 | 50° |
| $PEO/Li^+SCN^-$ | 5 | 75° |
| $PEO/Na^+SCN^-$ | 4,5 | 45° |
| $PEO/K^+SCN^-$ | 4,5 | 60° |
| $PEO/Rb^+SCN^-$ | 4,5 | 35° |
| $PEO/Cs^+SCN^-$ | 8 | 25° |
| $PEO/NH_4{}^+SCN^-$ | 4 | 40° |
| $PEO/Li^+BF_4{}^-$ | 4,5 | 20° |
| $PEO/Li^+CF_3CO_2{}^-$ | 4,5 | 75° |
| $PEO/Li^+CF_3SO_3{}^-$ | 4,5 | 70° |
| $PEO/Na^+CF_3SO_3{}^-$ | 4,5 | 85° |
| $PEO/Na^+CF_3SO_3{}^-$ | 6 | 40° |
| $PEO/K^+CF_3SO_3{}^-$ | 4,5 | 40° |
| $PPO/Li^+Br^-$ | 6 | 125° |
| $PPO/Li^+CF_3SO_3{}^-$ | 6 | 85° |
| $PPO/Na^+CF_3SO_3{}^-$ | 10 | 65° |
| $PPO/Na^+CF_3SO_3{}^-$ | 14 | 70° |

Exemple IV

D'autres solutions solides faisant intervenir des polymères appartenant à chacune des trois catégories précédemment citées ont été obtenues dans les mêmes conditions. Elles présentent les caractéristiques de composition indiquées dans le tableau suivant.

TABLEAU II

| Constituants de la solution solide | | Hétéroatomes / cations |
|---|---|---|
| Constituant macromoléculaire | Constituant ionique | |
| poly(glycidyl-méthyl éther) 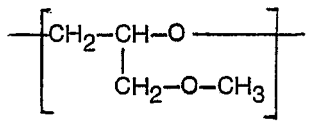 | / $Li^+ClO_4^-$<br>/ $K^+SCN^-$<br>/ $Na^+CF_3SO_3^-$ | 6<br>10<br>6 |
| poly (N-méthyl aziridine) 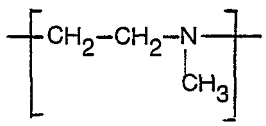 | / $Li^+ClO_4^-$<br>/ $Na^+CF_3SO_3^-$ | 6<br>8 |
| poly (méthoxy-éthoxy-éthylvinyl éther) 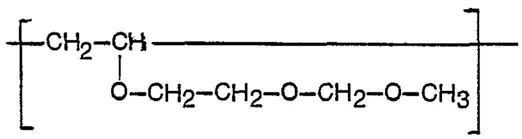 | / $Li^+ClO_4^-$<br>/ $K^+SCN^-$<br>/ $Na^+CF_3SO_3^-$ | 9<br>12<br>16 |

La conductivité de tous ces complexes mesurée à 80°C est dans tous les cas supérieure à $10^{-5}$ $ohm^{-1}.cm^{-1}$.

Et l'on peut encore réaliser de nombreuses autres solutions solides de ce type, toutes appropriées à la constitution de générateurs conformes à l'invention, notamment celles mettant en oeuvre, d'une part, des sels minéraux, tels que ci-dessis définis, d'autre part, des composés macromoléculaires, tels que les suivants mentionnés à titre d'exemples supplémentaires:

—le poly(glycidyl-éthoxy-éthyl éther)

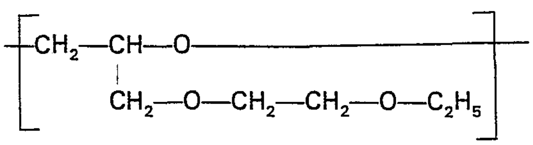

—le poly (glycidyl-méthoxy-éthoxy-éthoxy-éthyl éther)

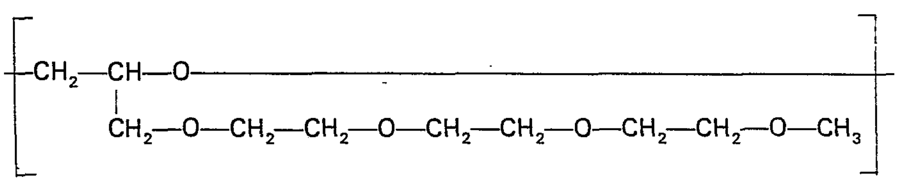

—le poly (N méthoxy-éthyl aziridine)

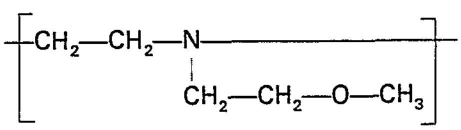

Comme il va de soi et comme il résulte d'ailleurs déjà de ce qui précède, l'invention ne se limite nullement à ceux de ses modes d'application et de réalisation qui ont été plus spécialement envisagés; elle en embrasse au contraire toutes les variantes; en particulier, les générateurs électrochimiques résultant de l'association d'une pluralité d'éléments de générateurs réunis en série, chacun de ces éléments constituant une unité de générateur présentant à titre individuel les caractéristiques qui ont été indiquées en ce qui concerne son électrolyte et ses électrodes.

**Revendications**

1. Générateur électrochimique de production de courant électrique comprenant au moins:

—une électrode négative dont la masse active forme une "source" de matériau à potentiel chimique supérieur, apte àfournir un cation alcalin ou ammonium à son interface avec un électrolyte solide,

—une électrode positive apte à former un "puits" à un potentiel chimique inférieur pour l'espèce non ionisée correspondant au cation alcalin susdit, l'électrolyte étant du type de ceux qui permettent le transfert de ce cation alcalin par conduction ionique de l'électrode négative à l'électrode positive, à l'occasion de la réaction électrochimique mise en jeu par la production de courant,

—un électrolyte solide constitué au moins en partie par une solution solide d'un composé ionique entièrement dissous au sein d'un matériau macromoléculaire solide, plastique:

—ledit composé ionique ayant pour formule $M^+X^-$, dans laquelle M est un cation dérivé d'un métal alcalin ou l'ion ammonium, ce cation correspondant au moins en partie au cation susceptible d'être fourni par l'électrode négative à son interface avec l'électrolyte, et $X^-$ est un anion d'un acide fort,

—ledit matériau macromoléculaire étant formé au moins en partie d'un ou plusieurs homo et/ou copolymères dérivés d'un ou plusieurs monomères comportant au moins un hétéro-atome notamment d'oxygène ou d'azote, apte à former des liaisons du type donneur-accepteur avec le cation $M^+$, caractérisé en ce que l'une au moins des susdites électrodes est constituée par le produit d'agglomération en une masse composite du matériau d'électrode, notamment de la matière active de celle-ci et, le cas échéant, d'un composé inerte à conduction électronique favorisant le transfert des charges vers l'extérieur, d'une part, et d'une solution solide monophasée de même nature que celle de l'électrolyte solide, d'autre part.

2. Générateur selon la revendication 1, caractérisé en ce que la solution solide entrant dans la constitution de la susdite électrode est identique à celle de l'électrolyte.

3. Générateur selon la revendication 2, caractérisé en ce que ladite solution solide susdite s'étend de façon sensiblement continue à partir de l'électrolyte vers et dans celle des électrodes qui lui sont associées, qui est formée de la susdite masse composite.

4. Générateur selon lune quelconque des revendications 1 à 3, caractérisé en ce que le susdit matériau macromoléculaire solide et plastique est également thermoplastique et essentiellement formé de chaînes d'homopolymères ou copolymères non réticulés.

5. Générateur selon l'une quelconque des revendications 1 à 4, caractérisé en ce que ses électrodes et son électrolyte sont essentiellement anhydres.

6. Générateur selon l'une quelconque des revendications 1 à 5, caractérisé en ce que le matériau macromoléculaire mis en jeu dans la constitution des susdites solutions solides est au moins en partie constitué par des homo ou copolymères contenant des chaînes comprenant au moins un hétéroatome d'oxygène ou d'azote, par quatre, de préference même deux atomes de carbone desdites chaînes, cet hétéroatomes soit participant directement à la formation desdites chaînes, soit étant directement liés, mais latéralement, à des atomes de carbone d'une chaîne formée à partir d'une succession homogène d'atomes de carbone, à raison d'un hétéroatome par quatre, de préference deux atomes de carbone.

7. Générateur selon la revendication 6, caractérisé par le fait que le matériau macromoléculaire mis en jeu dans ladite solution solide est dérivé de motifs monomères du type représenté

—soit par la formule suivante:

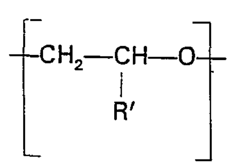

dans laquelle R′ représente un atome d'hydrogène ou l'un des groupes Ra, $—CH_2—O—R_a$, $—CH_2—O—Re—Ra$, $—CH_2—N = (CH_3)_2$ avec Ra représentant un radical alkyle ou cycloalkyle comportant notamment 1 à 16, de préférence 1 à 4 atomes de carbone,

Re représentant un radical polyéther de formule générale $—(CH_2—CH_2—O)_p—$, p ayant une valeur de 1 à 100, notamment de 1 à 2,

—soit par la formule suivante:

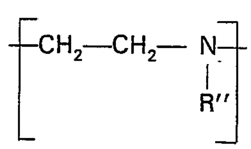

dans laquelle R″ représente Ra, —Re—Ra, avec Ra et Re ayant respectivement l'une des significations sus-indiquées,

—soit par la formule suivante:

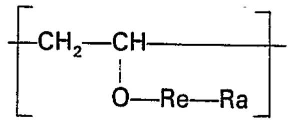

dans laquelle Ra et Re ont respectivement l'une des significations sus-indiquées.

8. Générateur selon la revendication 6, caractérisé en ce que le matériau macromoléculaire de ladite solution est un poly(oxyde d'éthylène).

9. Générateur selon la revendication 6, caractérisé par le fait que le matériau macromoléculaire de ladite solution solide est un matériau élastomère amorphe, isotrope, dérivé de motifs monomères du type représenté

—soit par la formule suivante:

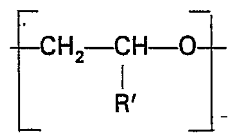

dans laquelle R′ représente l'un des groupes Ra, $—CH_2—O—Ra$, $—CH_2—O—Re—Ra$, $—CH_2—N=(CH_3)_2$, avec

Ra représentant un radical alkyle ou cycloalkyle comportant notamment 1 à 12, de préférence 1 à 4 atomes de carbone,

Re représentant un radical polyéther de formule générale $—(CH_2—CH_2—O)_p—$, p ayant une valeur de 1 à 10,

—soit, par la formule suivante:

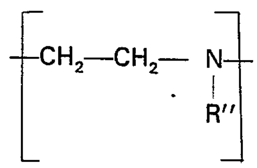

dans laquelle R″ représente Ra, —Re—Ra, avec Ra et Re ayant respectivement l'une des significations sus-indiquées,

—soit par la formule suivante:

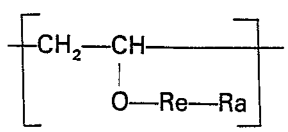

dans laquelle Ra et Re ont respectivement l'une des significations sus-indiquées.

10. Générateur selon la revendication 9, caractérisé par le fait que le matériau macromoléculaire de la susdite solution solide est constitué par du poly(oxyde de propylène).

11. Générateur selon l'une des revendications 1 à 10, caractérisé par le fait que le matériau macromoléculaire de la susdite solution solide a une masse moléculaire supérieure à 50.000, de préférence à 3.000.000.

12. Générateur selon l'une quelconque des revendications 1 à 11, caractérisé par le fait que le rapport du nombre d'hétéroatomes du matériau macromoléculaire au nombre de cations dans ladite solution solide est égal ou supérieur à 4, notamment de 4 à 30.

13. Générateur selon l'une quelconque des revendications 1 à 12, caractérisé par le fait que le rapport du nombre d'atomes de carbone au nombre d'hétéroatomes dans le matériau macromoléculaire entrant dans la constitution de ladite solution solide est compris entre 2 et 18, et de préférence de 2 ou 3.

14. Générateur selon l'une quelconque des revendications 1 à 13, caractérisé par le fait que l'anion du composé $M^+X^-$ de ladite solution solide est un anion à charge délocalisée, choisi de préférence parmi les suivants:

$$I^-,\ SCN^-,\ ClO_4^-,\ BF_4^-,\ PF_6^-,\ AsF_6^-,\ CF_3CO_2^-,\ CF_2SO_3^-,$$

et que le cation est, de préférence, $Li^+$ et $Na^+$.

15. Générateur selon l'une quelconque des revendications 1 à 13, caractérisé par le fait que l'anion du composé ionique est choisi parmi les anions suivants:

$$SCN^-,\ PF_6^-,\ AsF_6^-\ et\ CF_3SO_3^-$$

et le cation parmi les cations suivants:

$$Li^+, Na^+, K^+ \text{ et } NH_4^+.$$

16. Générateur selon l'une quelconque des revendications 1 à 13, caractérisé par le fait que l'anion du composé ionique $M^+X^-$ est

$$PF_6^- \text{ ou } AsF_6^-$$

et le cation $Rb^+$ et $Cs^+$.

17. Générateur selon l'une quelconque des revendications 1 à 13, caractérisé par le fait que le composé ionique $M^+X^-$ de ladite solution solide est choisi parmi les composés suivants:

$$Li^+Br^-, Li^+I^-, Na^+I^-, Li^+SCN^-, Na^+SCN^-, K^+SCN^-, Rb^+SCN^-, Cs^+SCN^-, NH_4^+SCN^-,$$

$$Li^+ClO_4^-, Na^+ClO_4^-, Li^+PF_6^-, Na^+PF_6^-, K^+PF_6^-,$$

$$NH_4^+PF_6^-, Li^+AsF_6^-, Na^+AsF_6^-, K^+AsF_6^-, NH_4^+AsF_6^-,$$

$$Li^+CF_3SO_3^-, Na^+CF_3SO_3^-, K^+CF_3SO_3^-, Rb^+CF_3SO_3^-, Cs^+CF_3SO_3^-, NH_4CF_3SO_3^-.$$

18. Générateur selon l'une quelconque des revendications 1 à 17, caractérisé en ce que l'électrolyte contient en outre, incorporé dans sa masse, au moins un autre constituant à conduction exclusivement ionique.

19. Générateur selon la revendication 18, caractérisé en ce que l'électrolyte est formé d'une masse composite d'agglomération, sensiblement homogène, de la susdite solution solide et d'au moins un composé minéral à conduction exclusivement ionique, à l'état de particules, dont les granulométries sont notamment de l'ordre de 1 à 500 microns, la proportion pondérale de composé minéral vis-à-vis de la masse de l'électrolyte étant de préférence comprise entre environ 50 et environ 90%.

20. Générateur électrochimique selon l'une quelconque des revendications 1 à 19, caractérisé par le fait que l'électrode négative est constituée par un composé, tel qu'un métal alcalin, un composé intermétallique, un alliage, un composé d'insertion ou analogue, susceptible de libérer un cation alcalin $M^+$ identique à celui de l'électrolyte et par le fait que l'électrode positive est formée d'un matériau contenant un composé dérivé d'un métal de transition, notamment du type sel de ce métal, ou composé intercalaire d'un sel de ce métal, qui permet la diffusion dans sa structure des atomes d'un métal alcalin.

21. Générateur selon l'une quelconque des revendications 1 à 20, caractérisé en ce que la matière active et, le cas échéant, les composés inertes à conduction électronique de l'électrode constituée par le susdit produit d'agglomération sont en proportion pondérale ne dépassant pas 25% en poids de l'électrode considérée, et qu'ils sont à l'état de particules dont la granulométric est de préférence comprise entre environ 1 et environ 500 microns, de préférence 10 à 100 microns.

22. Générateur selon la revendication 20 ou 21, caractérisé en ce que l'électrolyte et les électrodes sont formés d'un empilement de pellicules minces des matériaux correspondants mis en forme par laminage ou analogue.

23. Générateur selon l'une quelconque des revendications 1 à 22, caractérisé par des éléments de générateur formés de pellicules ou feuilles d'électrolyte ayant une épaisseur comprise entre 0,01 et environ 0,02 mm alternant avec des feuilles ou pellicules d'électrode ayant des épaisseurs de 0,1 à 0,5 mm.

24. Générateur selon l'une quelconque des revendications 1 à 23, caractérisé en ce qu'il est rechargeable.

**Patentansprüche**

1. Elektrochemischer Stromgenerator, umfassend wenigstens:

—eine negative Elektrode, deren aktive Masse eine "Quelle" für ein Material mit einem höheren chemischen Potential bildet, welche Elektrode befähigt ist, an ihrer Grenzfläche mit einem festen Elektrolyten ein Alkali-Kation oder Ammoniumkation zu liefern,

—eine positive Elektrode, die befähigt ist, eine "Senke" mit einem niedrigeren chemischen Potential für die dem obgenannten Alkali-Kation entsprechende nicht ionisierte Verbindung zu bilden, wobei der Elektrolyt von jenem Typus ist, der dem obgenannten Alkali-Kation im Zuge der durch die Stromerzeugung in Gang gesetzten elektrochemischen Reaktion die Übertragung dieses alkalischen Kations durch Ionenleitung von der negativen Elektrode zur positiven Elektrode ermöglicht,

—einen festen Elektrolyten, der wenigstens zum Teil aus einer festen Lösung einer ionischen Verbindung besteht, welche Verbindung in einem makromolekularen festen plastischen Material vollständig gelöst ist:

—wobei die besagte ionische Verbindung die Formel $M^+X^-$ hat, in welcher M ein von einem Alkalimetall abgeleitetes Kation oder das Ammonium ist und wobei dieses Kation wenigstens zum Teil jenem Kation entsprecht, das von der negativen Elektrode an ihrer Grenzfläche mit dem Elektrolyten geliefert werden kann, und $X^-$ ein Anion einer starken Säure ist,

—und wobei das obgenannte makromolekulare Material wenigstens zum Teil aus einem oder mehreren Homo- und/oder Copolymeren gebildet ist, die ihrerseits von einem oder mehreren Monomeren abgeleitet sind, die wenigstens ein Heteroatom, insbesondere Sauerstoff oder Stickstoff, aufweisen, welches befähigt ist, mit dem Kation $M^+$ Bindungen vom Typus Donator — Akzeptor zu bilden, dadurch gekennzeichnet, daß wenigstens eine der obgenannten Elektroden aus dem Agglomeration produkt zu einer Verbundmasse aus dem Elektrodenmaterial, insbesondere der aktiven Masse der Elektrode, und im gegebenen Falle einer inerten Verbindung mit Ekektronenleitung, die die Übertragung von Ladungen nach außen begünstigt, einerseits und einer einphasigen, festen Lösung von gleicher Art wie jener des festen Elektrolyten andererseits besteht.

2. Generator nach Anspruch 1, dadurch gekennzeichnet, daß die in den Aufbau der obgenannten Elektrode eingehende feste Lösung identisch mit jener des Elektrolyten ist.

3. Generator nach Anspruch 2, dadurch gekennzeichnet, daß sich die obgenannte feste Lösung auf im wesentlichen kontinuierliche Art und Weise, von dem Elektrolyten ausgehend, in Richtung auf jene der Elektroden hin, die mit dieser festen Lösung assoziiert ist, und in deren feste Lösung hinein erstreckt, welche Elektroden aus der obgenannten Verbundmasse gebildet sind.

4. Generator nach irgendienem der Ansprüche 1 bis 3, dadurch gekennzeichnet, daß das obgenannte makromolekulare feste und plastische Material auch thermoplastisch ist und im wesentlichen aus nicht vernetzten Ketten von Homopolymeren oder Copolymeren gebildet ist.

5. Generator nach irgendeinem der Ansprüche 1 bis 4, dadurch gekennzeichnet, daß seine Elektroden und sein Elektrolyt im wesentlichen wasserfrei sind.

6. Generator nach irgendeinem der Ansprüche 1 bis 5, dadurch gekennzeichnet, daß das für den Aufbau der obgenannten festen Lösungen eingesetzte makromolekulare Material wenigstens zum Teil aus Homo- oder Copolymeren besteht, welche Ketten enthalten, die wenigstens ein Sauerstoff- oder Stickstoffheteroatom auf vier oder vorzugsweise sogar zwei Kohlenstoffatome der besagten Ketten aufweisen, wobei diese Heteroatome entweder unmittelbar an der Bildung der besagten Ketten beteiligt sind oder unmittelbar, aber seitlich, an Kohlenstoffatome einer Kette gebunden sind, welche Kette ausgehend von einer homogenen Reihenfolge von Kohlenstoffatomen mit jeweils einem Heteroatom auf vier, vorzugsweise auf zwei, Kohlenstoffatome gebildet ist.

7. Generator nach Anspruch 6, dadurch gekennzeichnet, daß das in der obgenannten festen Lösung eingesetzte makromolekulare Material von monomeren Grundeinheiten von einem Typus abgeleitet ist, der

—entweder durch die folgende Formel:

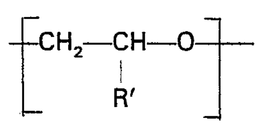

worin R′ ein Wasserstommatom oder eine der Gruppen Ra, $-CH_2-O-Ra$, $-CH_2-O-Re-Ra$, $-CH_2-N=(CH_3)_2$, bedeutet, in welchen Ra einen Alkyl- oder Cycloalkylrest mit insbesondere 1 bis 16, vorzugsweise 1 bis 4 Kohlenstoffatomen darstellt und Re einen Polyetherrest der allgemeinen Formel $-(CH_2-CH_2-O)_p-$, worin p einen Wert von 1 bis 100, insbesondere von 1 bis 2 hat, darstellt,

—oder durch die folgende Formel:

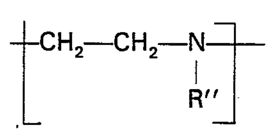

worin R″ für Ra oder —Re—Ra steht, wobei Ra und Re die oben angegebenen Bedeutungen haben,

—oder durch die folgenge Formel:

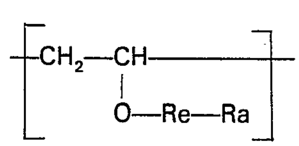

worin Ra und Re jeweils eine der oben angegebenen Bedeutungen haben, repräsentiert wird.

8. Generator nach Anspruch 6, dadurch gekennzeichnet, daß das makromolekulare Material der obgenannten Lösung ein Poly(ethylenoxid) ist.

9. Generator nach Anspruch 6, dadurch gekennzeichnet, daß das makromolekulare Material der

obgenannten festen Lösung ein elastomeres amorphes isotropes Material ist, das von monomeren Grundeinheidten von einem Typus abgeleitet ist, der

—entweder durch die folgende Formel:

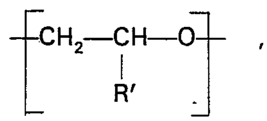

worin R′ eine der Gruppen Ra, $-CH_2-O-Ra$, $-CH_2-O-Re-Ra$, $-CH_2-N=(CH_3)_2$, bedeutet, in welchen Ra ein Alkyl- oder Cycloalkylrest mit insbesondere 1 bis 12, vorzugsweise 1 bis 4 Kohlenstoffatomen ist und Re ein Polyetherrest der allgemeinen Formel $-(CH_2-CH_2-O)_p-$, worin p einen Wert von 1 bis 10 hat, ist,

—oder durch die folgende Formel:

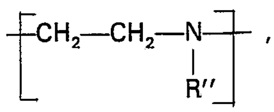

worin R″ für Ra oder —Re—Ra steht, wobei Ra und Re jeweils eine der oben angegebenen Bedeutungen haben,

—oder durch die folgende Formel:

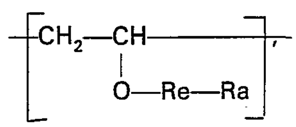

worin Ra und Re jeweils eine der oben angegebenen Bedeutungen haben, repräsentiert wird.

10. Generator nach Anspruch 9, dadurch gekennzeichnet, daß das makromolekulare Material der obgenannten festen Lösung aus Poly(propylenoxid) besteht.

11. Generator nach einem der Ansprüche 1 bis 10, dadurch gekennzeichnet, daß das makromolekulare Material der obgenannten festen Lösung eine höhere Molekularmasse als 50.000, vorzugsweise höher als 3.000.000, hat.

12. Generator nach irgendeinem der Ansprüche 1 bis 11, dadurch gekennzeichnet, daß das Verhältnis der Anzahl von Kationen in der obgenannten festen Lösung gleich groß wie oder größer als 4, insbesondere 4 bis 30, ist.

13. Generator nach irgendeinem der Ansprüche 1 bis 12, dadurch gekennzeichnet, daß das Verhältnis der Anzahl der Kohlenstoffatome zur Anzahl der Heteroatome in dem makromolekularen Material, das in den Aufbau der obgenannten festen Lösung eingeht, zwischen 2 und 18 liegt und vorzugsweise 2 oder 3 beträgt.

14. Generator nach irgendeinem der Ansprüche 1 bis 13, dadurch gekennzeichnet, daß das Anion der Verbindungen $M^+X^-$ der obgenannten festen Lösung ein Anion mit örtlich nicht festegelegter Ladung ist, das vorzugsweise aus den folgenden Anionen ausgewählt ist:

$$I^-, SCN^-, ClO_4^-, BF_4^-, PF_6^-, AsF_6^-, CF_3CO_2^-, CF_3SO_3^-,$$

und daß das Kation vorzugsweise $Li^+$ und $Na^+$ ist.

15. Generator nach irgendeinem der Ansprüche 1 bis 13, dadurch gekennzeichnet, daß das Anion der ionischen Verbindung aus den folgenden Anionen:

$$SCN^-, PF_6^-, AsF_6^- \text{ et } CF_3SO_3^-$$

ausgewählt ist und daß das Kation aus den folgenden Kationen

$$Li^+, Na^+, K^+ \text{ und } NH_4^+$$

ausgewählt ist.

16. Generator nach irgendeinem der Ansprüche 1 bis 13, dadurch gekennzeichnet, daß das Anion der ionischen Verbindung $M^+X^-$

$$PF_6^- \text{ oder } AsF_6^-$$

und das Kation $Rb^+$ und $Cs^+$ ist.

17. Generator nach irgendeinem der Ansprüche 1 bis 13, dadurch gekennzeichnet, daß die ionische Verbindung $M^+X^-$ der obgenannten festen Lösung aus den folgenden Verbindungen ausgewählt ist:

$Li^+Br^-$, $Li^+I^-$, $Na^+I^-$, $Li^+SCN^-$, $Na^+SCN^-$, $K^+SCN^-$, $Rb^+SCN^-$, $Cs^+SCN^-$, $NH_4^+SCN^-$,

$Li^+ClO_4^-$, $Na^+ClO_4^-$, $Li^+PF_6^-$, $Na^+PF_6^-$, $K^+PF_6^-$,

$NH_4^+PF_6^-$, $Li^+AsF_6^-$, $Na^+AsF_6^-$, $K^+AsF_6^-$, $NH_4^+AsF_6^-$,

$Li^+CF_3SO_3^-$, $Na^+CF_3SO_3^-$, $K^+CF_3SO_3^-$, $Rb^+CF_3SO_3^-$, $Cs^+CF_3SO_3^-$, $NH_4^+CF_3SO_3^-$.

18. Generator nach irgendeinem der Ansprüche 1 bis 17, dadurch gekennzeichnet, daß der Elektrolyt außerdem, in seine Masse einverleibt, wenigstens einen anderen Bestandteil mit ausschließlicher Ionenleitung enthält.

19. Generator nach Anspruch 18, dadurch gekennzeichnet, daß der Elektrolyt aus einer im wesentlichen homogenen Agglomerationsverbundmasse aus der obgenannten festen Lösung und wenigstens einer mineralischen Verbindung mit ausschließlicher Ionenleitung in Form von Teilchen gebildet ist, deren Teilchengrößen insbesondere in der Größenordnung von 1 bis 500 Mikron (μm) liegen, wobei der Gewichtsanteil der Mineralverbindung, bezogen auf die Masse des Elektrolyten, vorzugsweise zwischen ungefähr 50 und ungefähr 90% liegt.

20. Elektrochemischer Generator nach irgendeinem der Ansprüche 1 bis 19, dadurch gekennzeichnet, daß die negative Elektrode aus einer Verbindung, wie beispielsweise einem Alkalimetall, einer intermetallischen Verbindung, einer Legierung, einer Einlagerungsverbindung oder einer ähnlichen Verbindung besteht, welche Verbindung befähigt ist, ein alkalisches Kation $M^+$ freizusetzen, das identisch mit dem Kation des Elektrolyten ist, und weiterhin dadurch gekennzeichnet, daß die positive Elektrode aus einem Material gebildet ist, das eine von einem Übergangsmetall abgeleitete Verbindung, insbesondere eine salzartige Verbindung dieses Metalles, oder eine Zwischenverbindung einer Salzes dieses Metalles, welche das Eindiffundieren der Atome eines Alkalimetalles in ihre Struktur gestattet, enthält.

21. Generator nach irgendeinem der Ansprüche 1 bis 20, dadurch gekennzeichnet, daß die aktive Masse und, im gegebenen Falle, die inerten Verbindungen mit Elektronenleitung der aus dem obgenannten Agglomerationsprodukt bestehenden Elektrode in einem Gewichtsanteil vorliegen, der 25 Gew.-% der in Betracht gezogenen Elektrode nicht überschreitet, und daß sie in Form von Teilchen vorliegen, deren Teilchengroße vorzugsweise zwischen ungefähr 1 und ungefähr 500 Mikron (μm) liegt und vorzugsweise 10 bis 100 Mikron (μm) beträgt.

22. Generator nach Anspruch 20 oder 21, dadurch gekennzeichnet, daß der Elektrolyt und die Elektroden durch Übereinanderstapeln von dünnen Folien aus entsprechenden Materialien gebildet sind, welche Folien durch Laminieren oder eine ähnliche Methode in Form gebracht worden sind.

23. Generator nach irgendeinem der Ansprüche 1 bis 22, gekennzeichnet durch generatorelemente, die aus Filmen oder Folien aus Elektrolyte mit einer Dicke zwischen 0,01 und ungefähr 0,02 mm, welche mit Folien oder Filmen von Elektroden mit einer dicke von 0,1 bis 0,5 mm alternieren, gebildet sind.

24. Generator nach irgendeinem der Ansprüche 1 bis 23, dadurch gekennzeichnet, daß er weideraufladbar ist.

**Claims**

1. Electrochemical generator for the production of electrical current comprising at least:

—a negative electrode whose active mass forms a "source" of material having higher chemical potential, liable of supplying an alkali cation or an ammonium cation at its interface with a solid electrolyte,

—a positive electrode able to form a "well" at a lower chemical potential for the non-ionized species corresponding to said alkali cation, the electrolyte being of the type of those which enable the transfer of this alkali cation by ionic conduction from the negative electrode to the positive electrode, when the electrochemical reaction brought into play by the production of current takes place,

—a solid electrolyte constituted at least in part by a solid solution of an ionic compound entirely dissolved within a plastic, solid macromolecular material:

—said ionic compound having the formula $M^+X^-$ in which M is a cation derivative of an alkali metal or the ammonium ion, this cation corresponding at least in part to the cation liable to be supplied by the negative electrode at its interface with the electrolyte and $X^-$ is an anion of a strong acid.

—the said macromolecular material being formed at least in part by one of several homo- and/or copolymers derivative of one or several monomers comprising at least one heteroatom, particularly oxygen or nitrogen, liable to form donor-acceptor type bonds with the cation $M^+$ characterized in that at least one of said electrodes is constituted by the agglomeration product in a composite mass of the

electrode material, particularly of the active material thereof and, optionally, of an inert compound having electronic conduction favoring the transfer of charges to outside, on the one hand, and of a mono-phased solid solution of the same nature as that of the solid electrolyte, on the other hand.

2. Generator according to claim 1, characterized in that the solid solution involved in the constitution of said electrode is identical to that of the electrolyte.

3. Generator according to claim 2, characterized in that said solid solution extends in substantially continuous a manner from the electrolyte towards and into that of said electrode which is associated therewith, which is formed of said composite mass.

4. Generator according to any one of claims 1 to 3, characterized in that said solid and plastic macromolecular material is also thermoplastic and essentially formed of non cross-linked homopolymer- or copolymer-chains.

5. Generator according to any one of claims 1 to 4, characterized in that its electrodes and its electrolyte are essentially anhydrous.

6. Generator according to any of claims 1 to 5, characterized in that the macromolecular material resorted to in the constitution of the abovesaid solid solutions is at least in part constituted by homo- or copolymers containing chains comprising at least one heteroatom of oxygen or nitrogen, for four, preferably even for two, carbon atoms of the said chains, these heteroatoms either participating directly in the formation of the said chains, or being directly linked, but laterally, to carbon atoms of a chain formed from a homogenous sequence of carbon atoms, in the ratio of one heteroatom to four, preferably to two carbon atoms.

7. Generator according to claim 6, characterized in that the macromolecular material brought into play in said solid solution is a derivative of monomer units represented

—either by the following formula:

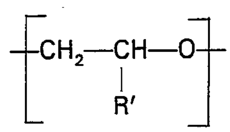

in which R′ represents an hydrogen atom or one of the groups Ra, $—CH_2—O—Ra$, $—CH_2—O—Re—Ra$ $CH_2—N{=}(CH_3)_2$, with Ra representing an alkyl or cycloalkyl radical comprising particularly 1 to 16, preferably 1 to 4 carbon atoms, Re representing a polyether radical of general formula $—(CH_2—CH_2—O)_p—$, p having a value from 1 to 100, particularly from 1 to 2,

—or by the following formula:

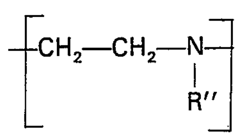

in which R″ represents Ra, —Re—Ra with Ra and Re having respectively one of the above-indicated meanings,

—or by the following formula:

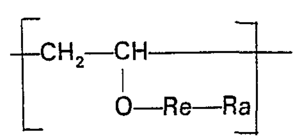

in which Ra and Re have respectively one of the above-indicated meanings.

8. Generator according to claim 6, characterized in that the macromolecular material of said solution is a poly(ethylene oxide).

9. Generator according to claim 4, characterizewd in that the macromolecular material of said solid solution is an elastomeric, amorphous, isotronic material, derivative of monomeric units of the type represented:

—either by the following formula

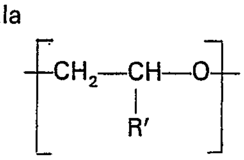

in which R′ represents one of the groups Ra, $—CH_2—O—Ra$, $—CH_2—O—Re—Ra$, $CH_2—N{=}(CH_3)_2$, with Ra representing an alkyl or cycloalkyl radical comprising particularly 1 to 12, preferably 1 to 4 carbon atoms, Re representing a polyether radical of the general formula $—(CH_2—CH_2—O)_p$, p having a value from 1 to 10,

—or by the following formula:

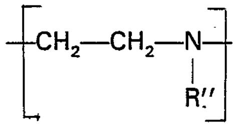

in which R'' represents Ra, —Re—Ra, with Ra and Re having respectively one of the above-indicated meanings,

—or by the following formula:

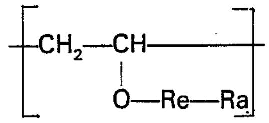

in which Ra and Re have respectively one of the above indicated meanings.

10. Generator according to claim 9, characterized in that the macromolecular material of the solid solution is constituted by poly (propylene oxide).

11. Generator according to any one of claims 1 to 10, characterized by the fact that the macromolecular material of said solid solution has a molecular weight higher than 50,000, preferably higher than 3,000,000.

12. Generator according to any one of claims 1 to 11, characterized by the fact that the ratio of the number of heteroatoms of the macromolecular material to the number of the cations in said solid solution is equal to or higher than 4, particularly from 4 to 30.

13. Generator according to any one of claims 1 to 12, characterized by the fact that the ratio of the number of carbon atoms in the macromolecular material which is involved in the constitution of said solid solution is comprised between 1 and 18, and preferably is 2 or 3.

14. Generator according to any one of claims 1 to 13, characterized by the fact that the anion of the compound $M^+X^-$ of said solid solution is an anion with delocalized charge, selected preferably from among the following:

$$I^-,\ SCN^-,\ ClO_4^-,\ BF_4^-,\ PF_6^-,\ AsF_6^-,\ CF_3CO_2^-,\ CF_3SO_3^-,$$

and that the cation is, preferably, $Li^+$ and $Na^+$.

15. Generator according to any one of claims 1 to 13, characterized by the fact that the anion of the anionic compound is selected from the following anions:

$$SCN^-,\ PF_6^-,\ AsF_6^- \text{ and } CF_3SO_3^-$$

and the cation from among the following cations:

$$Li^+,\ Na^+,\ K^+ \text{ and } NH_4^+.$$

16. Generator according to any one of claims 1 to 13, characterized by the fact that the anion of the ionic compound is:

$$PF_6^- \text{ or } AsF_6^-$$

and the cation $Rb^+$ and $Cs^+$.

17. Generator according to any one of claims 1 to 13, characterized by the fact that the ionic compound $M^+X^-$ of said solid solution is selected from among the following compounds:

$$Li^+Br^-,\ Li^+I^-,\ Na^+I^-,\ Li^+SCN^-,\ Na^+SCN^-,\ K^+SCN^-,\ Rb^+SCN^-,\ Cs^+SCN^-,\ NH_4^+SCN^-,$$

$$Li^+ClO_4^-,\ Na^+ClO_4^-,\ Li^+PF_6^-,\ Na^+PF_6^-,\ K^+PF_6^-,$$

$$NH_4^+PF_6^-,\ Li^+AsF_6^-,\ Na^+AsF_6^-,\ K^+AsF_6^-,\ NH_4^+AsF_6^-,$$

$$Li^+CF_3SO_3^-,\ Na^+CF_3SO_3^-,\ K^+CF_3SO_3^-,\ Rb^+CF_3SO_3^-,\ Cs^+CF_3SO_3^-,\ NH_4CF_3SO_3^-.$$

18. Generator according to any one of claims 1 to 17, characterized by the fact that the electrolyte contains moreover, incorporated in its mass, at least another constituent having exclusively ionic conduction.

19. Generator according to claim 18, characterized in that the electrolyte is formed of a

substantially homogenous agglomerated composite mass, of the abovesaid solid solution and of at least one inorganic compound with exclusively ionic conduction in the state of particles, whose granulometries are particularly of about 1 to 500 microns, the proportion by weight of the inorganic compound with respect to the weight of the electrolyte being preferably comprised between about 50 and about 90%.

20. Electrochemical generator according to any one of claims 1 to 19, characterized by the fact that the negative electrode is constituted by a compound such as an alkali metal, an intermetallic compound, an alloy, an insertion compound of the like, capable of liberating an alkali cation $M^+$ identical to the one of the electrolyte and by the fact that the positive electrode is formed of a material containing a compound derived from a transition metal, particularly of the type of a salt of this metal, or intercalary compound of a salt of this metal, which enables the diffusion within its structure of the atoms of an alkali metal.

21. Generator according to any one of claims 1 to 20, characterized in that the active matter and, possibly, the inert compounds with electrical conduction of the electrode constituted by said agglomeration product are in weight proportion which is not higher that 25% in weight of the concerned electrode, and in that they are in the state of particles, the granulometry of which is comprised between about 1 and about 500 microns, preferably between 10 and 100 microns.

22. Generator according to claims 20 or 21, characterized in that the electrolyte and the electrodes are formed of a stacking of thin sheets of corresponding materials shaped by rolling or the like.

23. Generator according to any one of claims 1 to 22, characterized by generator elements formed of electrolyte sheets or films having a thickness between 0.01 and about 0.02 mm, in alternance with electrode sheets or films having thicknesses from 0.1 to 0.5 mm.

24. Generator according to any one of claims 1 to 23, characterized in that it is rechargeable.

0013199

Fig.1.

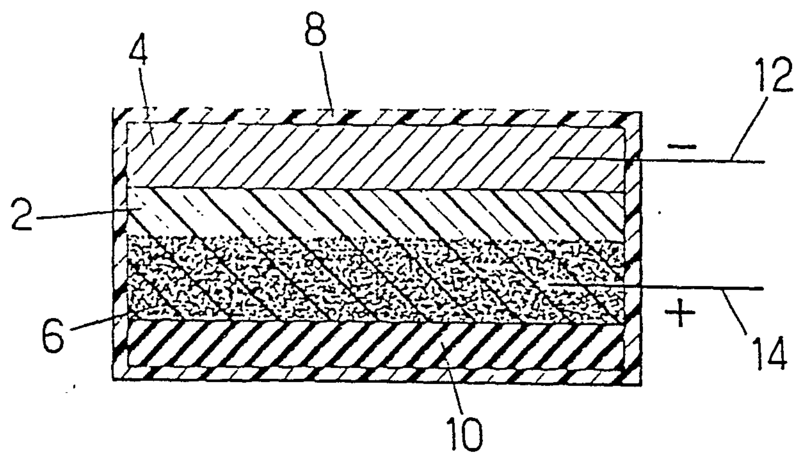


Fig. 2.

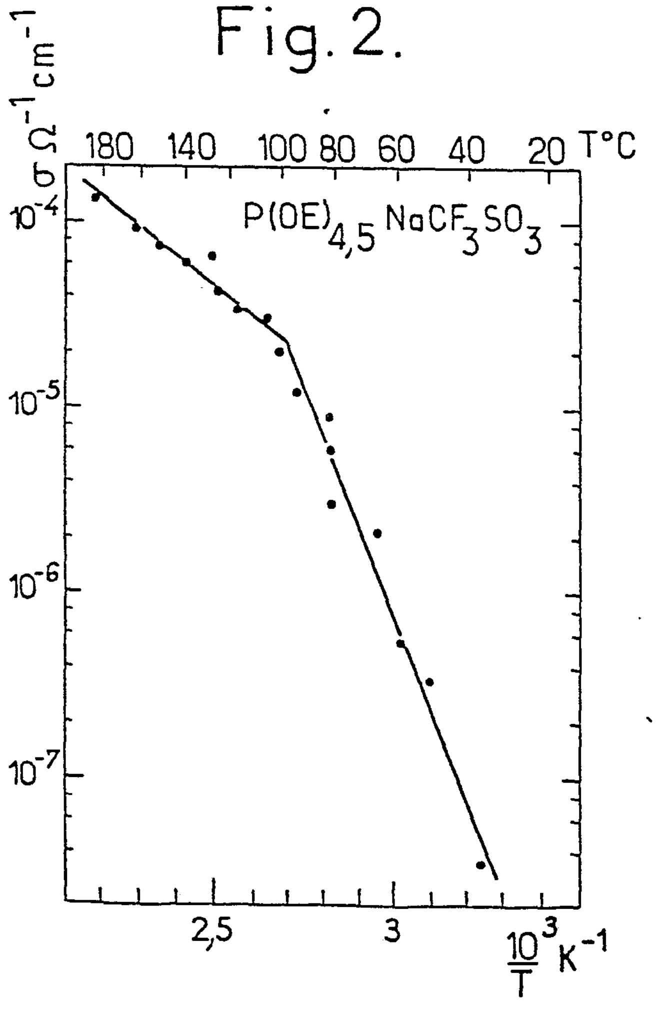


Fig. 3.